Europäisches Patentamt

(19) European Patent Office

Office européen des brevets

(11) Numéro de publication: 0 241 061
A2

(12) **DEMANDE DE BREVET EUROPEEN**

(21) Numéro de dépôt: 87200403.1

(22) Date de dépôt: 05.03.87

(51) Int. Cl.³: **G 01 N 23/20**

(30) Priorité: 18.03.86 FR 8603818

(43) Date de publication de la demande:
14.10.87 Bulletin 87/42

(84) Etats contractants désignés:
CH DE FR GB IT LI NL

(71) Demandeur: Laboratoires d'Electronique et de Physique
Appliquée L.E.P.
3, Avenue Descartes
F-94450 Limeil-Brévannes(FR)

(84) Etats contractants désignés:
FR

(71) Demandeur: N.V. Philips' Gloeilampenfabrieken
Groenewoudseweg 1
NL-5621 BA Eindhoven(NL)

(84) Etats contractants désignés:
CH DE GB IT LI NL

(72) Inventeur: Schiller, Claude Société Civile S.P.I.D.
209, rue de l'Université
F-75007 Paris(FR)

(74) Mandataire: Chaffraix, Jean et al,
Société Civile S.P.I.D. 209, rue de l'Université
F-75007 Paris(FR)

(54) Dispositif pour la mesure de l'orientation de matériaux massifs monocristallins par la méthode de Laüe.

(57) Dispositif pour la mesure de l'orientation de matériaux massifs monocristallins par la méthode de la chambre de Laüe comprenant des moyens de support pour un échantillon massif et des moyens d'alignement pour la chambre de Laüe et les moyens de support, caractérisé en ce que les moyens de support comprennent un porte-échantillon (10) qui présente une première face plane (1) pour recevoir l'échantillon, une seconde face plane (2) perpendiculaire à la première pour bloquer l'échantillon, un premier (11) et un second (12) plans de référence respectivement parallèles à la première (1) et à la seconde (2) faces planes, et un troisième plan de référence (13) perpendiculaire à la fois à la première (1) et à la seconde (2) faces planes, en ce que les moyens d'alignement consistent en un banc d'optique (8) présentant au moins deux plans (21,22) de référence parallèles à l'axe optique de la chambre de Laüe, lesquels supportent pendant la mesure soit le premier (11) et le second (12), soit le premier (11) et le troisième (13) plans de référence du porte-échantillon (10).

FIG. 2a

Croydon Printing Company Ltd.

DISPOSITIF POUR LA MESURE DE L'ORIENTATION DE MATERIAUX
MASSIFS MONOCRISTALLINS PAR LA METHODE DE LAUE

L'invention concerne un dispositif pour la mesure
de l'orientation de matériaux massifs monocristallins par rapport aux repères cristallographiques par la méthode de Laüe,
formé d'une part d'une chambre de Laüe incluant une source polychromatique de rayons X, un support de film photographique
et un collimateur placé sur le trajet des rayons X entre la
source et le film à proximité de ce dernier définissant l'axe
optique de la chambre de Laüe, et formé d'autre part de moyens
de support pour un échantillon massif, de moyens d'alignement
pour la chambre et les moyens de support, et de moyens pour
repérer l'orientation de l'échantillon par rapport aux axes
cristallographiques.

L'invention concerne en outre un procédé de réalisation d'un dispositif semiconducteur à partir d'un lingot
massif monocristallin semiconducteur mettant en oeuvre ce dispositif.

L'invention trouve son application dans la mesure
de l'orientation de monocristaux de nouveaux matériaux, tels
que par exemple les semiconducteurs, pour former des cristaux
servant de germes de tirage, ou pour former des plaquettes de
substrats destinés à recevoir des couches épitaxiales, orientation pour laquelle une précision extrême est requise. L'invention trouve une application toute particulière dans
l'orientation des monocristaux de composés III-V tels que par
exemple l'arséniure de gallium.

La méthode dite de Laüe est bien connue de l'état
de la technique, par exemple par la publication intitulée
"Introduction à la physique de l'état solide" par Kittel chez
DUNOD-Editeur pages 50-51.

Selon cette méthode, un monocristal est maintenu immobile, dans un faisceau de rayons X polychromatique. Le cristal diffracte seulement les ondes ayant des longueurs pour lesquelles il existe des plans réticulaires séparés d'une distance et inclinés par rapport au faisceau d'un angle tel que la loi de Bragg soit vérifiée. Chaque plan du cristal sélectionne, dans le faisceau incident, une longueur d'onde correspondant à l'équation de Bragg. Le diagramme obtenu par la méthode de Laüe est formé de taches dont la disposition est caractéristique de la symétrie du cristal, et il peut être utilisé pour orienter le monocristal par rapport aux repères cristallographiques.

Un dispositif pour la mise en oeuvre de la méthode de Laüe est connu par les brevets US 2 495 111 , 2 543 160, 2 933 993, 2 483 389, 2 854 908 et autres, déposés par la société POLAROÏD entre 1949 et 1954. Ce dispositif comprend, outre un support pour un film, un collimateur formé d'un tube muni d'un diaphragme à chaque extrémité, fixé sur un support perpendiculairement au film et à faible distance d'une des faces de ce dernier, et un écran dit de transformation fixé sur le support parallèlement au film et à faible distance de l'autre face de ce dernier. Cet écran de transformation transforme les photons X en photons visibles pour une meilleure utilisation des films négatifs POLAROÏD qui ne sont pas très sensibles aux rayons X.

Pour obtenir un diagramme de Laüe à l'aide de ce dispositif connu, un faisceau polychromatique issu d'une source de rayons X est dirigé vers le collimateur, traverse le collimateur, le film négatif, puis l'écran de transformation par une ouverture circulaire pratiquée dans ce dernier, avant de frapper le cristal à étudier. Le faisceau de rayons X forme ainsi sur le film une tache qui constitue la trace du faisceau direct et qui matérialise l'axe optique du dispositif. Les rayons qui atteignent le cristal sont diffractés par des plans cristallins superficiels et reviennent vers le support de film négatif. Les rayons diffractés frappent donc en retour l'écran de transformation qui transforme les photons X en visibles, lesquels impressionnent à leur tour le film négatif, formant le diagramme de diffraction du monocristal, diagramme dont la tache centrale est constituée par la trace du faisceau direct de rayons X.

Les mesures donnant l'orientation du cristal étudié, par rapport aux repères cristallographiques, sont effectuées à partir du diagramme réalisé sur le film négatif, ou sur un positif tiré du film négatif.

Il est clair que pour obtenir une information très précise sur l'orientation du cristal, l'alignement optique de l'ensemble du système formé par la chambre de Laüe et le cristal, doit être d'une grande précision.

Or le dispositif connu ne permet qu'une mise en place relativement imprécise des différents éléments, tel que le support de film par exemple, et aucune information n'est fournie concernant la mise en place du cristal à caractériser.

Le document "Introduction à la physique de l'état solide" cité comme état de la technique, propose de placer l'échantillon sur une platine goniométrique. Mais un tel montage est d'une mise en oeuvre lente et contraire à des mesures précises systématiques qui doivent être utilisées en fabrication de dispositifs semiconducteurs à partir de monocristaux par exemple.

C'est pourquoi la présente invention propose à la fois un dispositif et une méthode de mesure qui permettent de résoudre ces problèmes.

Selon l'invention, ces problèmes sont résolus à l'aide d'un dispositif tel que décrit dans le préambule, caractérisé en ce que les moyens de support comprennent au moins un porte-échantillon qui présente une première face plane pour recevoir l'échantillon, une seconde face plane perpendiculaire à la première pour bloquer l'échantillon, un premier plan de référence parallèle à la première face plane, un second plan de référence parallèle à la seconde face plane et un troisième plan de référence perpendiculaire à la fois à la première et à la seconde face plane, en ce que les moyens d'alignement consistent en un banc d'optique présentant au moins deux faces planes de référence parallèles à l'axe optique de la chambre de Laüe, et en ce que les moyens de support et les moyens d'alignement coopèrent pour fournir les moyens pour repérer l'orientation de l'échantillon du fait que le premier et le second plan de référence du banc d'optique supportent pendant la mesure l'ensemble choisi parmi le premier et le second, ou bien le premier et le troisième plan de référence du porte-échantillon.

Ce dispositif peut en outre être caractérisé en ce que, lorsque le premier et le second plan de référence du banc d'optique supportent l'ensemble du premier et du second plan de référence du porte-échantillon, la première face plane et la seconde face plane de ce porte-échantillon sont réglées par rapport à l'axe optique de la chambre de Laüe à une distance de cet axe sensiblement égale au rayon moyen de l'échantillon.

Ce dispositif peut encore être caractérisé en ce que les moyens de support comprennent en outre un porte-disque qui présente une première face plane, et une seconde face plane perpendiculaire à la première pour appuyer et bloquer la tranche d'un disque monocristallin taillé dans un lingot, une troisième face plane perpendiculaire aux deux premières pour recevoir l'un des faces du disque, un premier plan de référence parallèle à la première face plane, et un second plan de référence parallèle à la seconde face plane, et en ce que le porte-disque coopère avec le porte-échantillon et avec les moyens d'alignement pour fournir les moyens pour repérer l'orientation du disque, du fait que, pendant la mesure, le premier et le deuxième plan de référence du porte-disque prennent appui sur la première et la deuxième face plane du porte-échantillon, et du fait que le premier et le second plan de référence du banc d'optique supportent le premier et le troisième plan de référence du porte-échantillon.

Le dispositif conforme à l'invention présente de nombreux avantages dont entre autres :

- le fait d'être d'une réalisation simple et peu coûteuse,

- le fait de permettre des orientations très précises à mieux que 0,1° par rapport à un axe ou une face cristallographique. En effet, la mise en place des éléments mobiles comme le film par exemple n'ont dans ce dispositif aucune influence sur le résultat de la mesure, cette mesure étant faite par rapport à des plans de référence usinés mécaniquement avec une grande précision, et mis en place d'une manière fixe par rapport à l'axe optique,

- le fait de permettre des mesures répétitives et systématiques, c'est-à-dire une application industrielle à grande échelle d'un coût compétitif,

- le fait de permettre l'orientation du lingot par rapport à une génératrice du cylindre. Cette opération permet en effet d'obtenir directement la désorientation éventuelle du grand méplat et constitue une des étapes décisives de la préparation du matériau pour son usage industriel, c'est-à-dire, par exemple, pour la préparation du substrat d'un circuit intégré.

L'invention sera mieux comprise à l'aide de la description suivante illustrée par les figures annexées dont :

- la figure 1 qui représente en coupe schématique parallèlement à l'axe optique, une chambre de Laüe,

- la figure 2a qui représente le porte-échantillon pour lingots monocristallins, selon l'invention, en perspective,

- la figure 2b qui représente en coupe le porte-échantillon pour lingots de diamètre 51mm,

- la figure 2c qui représente en coupe le porte-échantillon pour lingots de diamètre 76mm,

- la figure 2d qui représente en plan l'arrière du porte-échantillon,

- la figure 3a qui représente le banc d'optique en perspective,

- la figure 3b qui représente le montage du porte-échantillon sur le banc d'optique pour des mesures selon une génératrice du lingot,

- la figure 3c qui représente le montage du porte-échantillon sur le banc pour une mesure sur une face du lingot perpendiculaire à l'axe de tirage,

- la figure 4a qui représente un lingot d'arséniure de gallium brut de tirage,

- la figure 4b qui représente la position des taches de diffraction dans un diagramme de Laüe obtenu sur une face du lingot d'arséniure de gallium perpendiculaire à l'axe [100] de tirage,

- la figure 4c qui représente un tel lingot sur lequel on a formé un grand méplat de référence,

- la figure 4d qui représente la position des taches de diffraction dans un diagramme de Laüe obtenu sur une génératrice du lingot d'arséniure de gallium parallèle à l'axe [100] de tirage et perpendiculaire à l'axe [0$\bar{1}$1],

- la figure 4e qui représente un tel lingot ayant subi un usinage approprié à le rendre cylindrique, et sur lequel ont été formés un grand méplat perpendiculaire à l'axe [0$\bar{1}$1] et un petit méplat perpendiculaire à l'axe [01$\bar{1}$],

- la figure 4f qui représente un disque taillé dans un tel cylindre,

- la figure 5a qui représente un tel lingot monté sur le porte-échantillon en position de mesure sur une génératrice,

- la figure 5b qui représente un tel lingot monté sur le porte-échantillon, en position de mesure sur une face terminale,

- la figure 6a qui représente le porte-disque et le porte-échantillon en perspective,

- la figure 6b qui représente le porte-disque vu de face,

- la figure 6c qui représente le porte-disque en coupe.

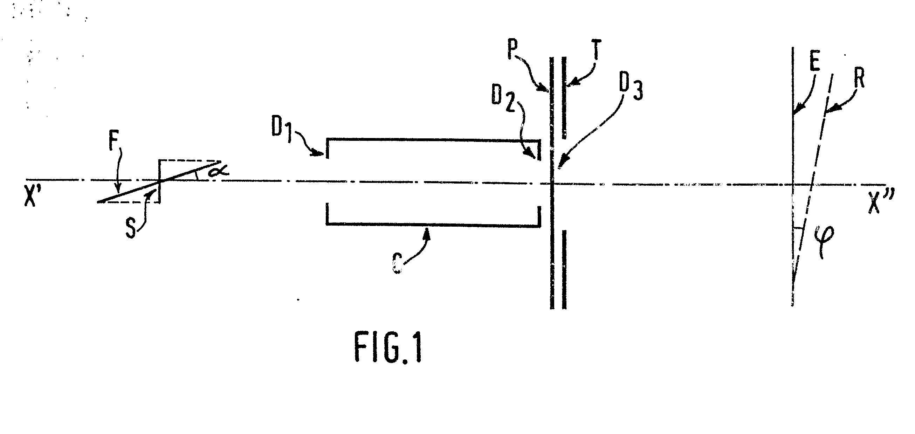

Telle que représentée schématiquement en coupe sur la figure 1, la chambre de Laüe comprend donc :

- une source S polychromatique de rayons X, qui peut être avantageusement une source PHILIPS du type PW 2224/20 à anticathode de tungstène, dont le foyer F a pour dimension 0,4 x 8mm et peut être utilisée sous un angle de prélèvement α compris entre 0 et 20° ;

- un collimateur C destiné à former un fin pinceau de rayons X direct, formé par exemple d'un tube métallique muni de diaphragmes $D_1$ et $D_2$ à chaque extrémité ;

- un film plan P monté dans un support non représenté ;

- et un écran de tranformation T.

Ces éléments sont connus de l'homme du métier et ne font pas à proprement parler partie de l'invention.

Comme il est montré sur la figure 1, les rayons X issus de la source S traversent le collimateur C et l'écran de transformation T par une ouverture $D_3$ de diamètre supérieur à l'ouverture des diaphragmes $D_1$ et $D_2$ du collimateur.

Puis les rayons frappent l'échantillon E. Les rayons qui atteignent l'échantillon sont diffractés par exemple par un plan réticulaire R qui fait un angle φ avec la surface de l'échantillon E.

Les rayons diffractés reviennent alors vers le support de film négatif. Ils frappent en retour l'écran de tranformation T qui transforme les photons X en visibles lesquels impressionnent à leur tour le film négatif, formant le diagramme de diffraction du monocristal, diagramme dont la tache centrale est constituée par la trace du faisceau direct de rayons X.

La source S de rayons X, le collimateur C, le support de plan-film P, l'écran de transformation T et un porte-échantillon pour l'échantillon E sont montés sur un banc d'optique de haute précision, ce banc étant lui-même monté sur un "marbre" également de haute précision. Ces éléments sont de plus alignés optiquement sleon l'axe X'X".

L'homme du métier sait que les échantillons monocristallins destinés à l'utilisation industrielle présentent des formes et des dimensions standards.

Ces monocristaux sont le plus suvent à ce jour des semiconducteurs. Ce peut être par exemple du germanium ou du silicium.

Ce peut être aussi des composés monocristallins du groupe III-V tel que l'arséniure de gallium, composé relativement nouveau comparé au silicium et pour lequel de nombreux problèmes restent encore à résoudre.

Ces monocristaux semiconducteurs du groupe IV comme le germanium et silicium, ou du groupe III-V comme l'arséniure de gallium, sont en général obtenus par croissance à partir d'un bain fondu par une méthode du type Czochralsky par exemple, à partir d'un germe de tirage soigneusement orienté.

Pour leur application industrielle, ils doivent ensuite être façonnés sous la forme d'un cylindre d'axe confondu avec l'axe de tirage du lingot d'origine.

Ce cylindre présente le plus souvent un diamètre standard, exprimé dans les anciennes unités anglo-saxonnes, qui est 2 pouces c'est-à-dire approximativement 51 mm, ou bien 3 pouces c'est-à-dire approximativement 76 mm.

De plus, toujours pour ces applications industrielles, ces cylindres doivent présenter un méplat de repérage effectué selon une facette cristallographique choisie de façon conventionnelle entre fabricants et utilisateurs.

A partir de ces cylindres, sont encore taillés, pour l'application aux circuits intégrés par exemple, des disques minces, perpendiculairement à l'axe de symétrie du cylindre.

La trace du méplat du cylindre forme sur les disques un pan coupé qui permet le repérage de l'orientation de chaque disque, cette orientation étant très importante du fait que ces matériaux présentent en général des propriétés anisotropes.

Toutes ces opérations de façonnage du cylindre, du méplat, des plaquettes doivent être conduites avec une précision extrême concernant l'orientation de l'axe du cylindre, l'orientation du méplat, l'orientation des faces parallèles des disques.

En effet, de la précision de l'orientation de l'axe du cylindre dépend la précision des faces parallèles des disques, et donc la qualité des couches par exemple épitaxiales ou implantées, réalisées ultérieurement. De la précision de l'orientation du méplat dépend l'orientation des dispositifs actifs et passifs réalisés sur les disques utilisés comme substrat de circuits intégrés, et donc les performances desdits circuits, puisque ces performances dépendent de l'orientation des éléments du fait de l'anisotropie des propriétés du matériau.

Le dispositif connu de l'état de la technique sous le nom de chambre de Laüe permet de déterminer l'orientation des monocristaux qui sont soumis à cette méthode.

Mais pour l'application envisagée, ce dispositif doit être amélioré pour fournir :

- des mesures très précises, c'est-à-dire avec une précision meilleure que, ou égale à 0,1° sur l'orientation,

- des mesures très répétitives, c'est-à-dire qui ne dépendent pas d'un réglage, d'une mise en place ou d'un alignement optique laborieux assujetti au savoir-faire du technicien,

- des mesures pouvant être mise en oeuvre en fabrication industrielle, c'est-à-dire de façon systématique et simple lors de la fabrication industrielle des lingots et des disques conduisant à la fabrication industrielle des circuits intégrés par exemple.

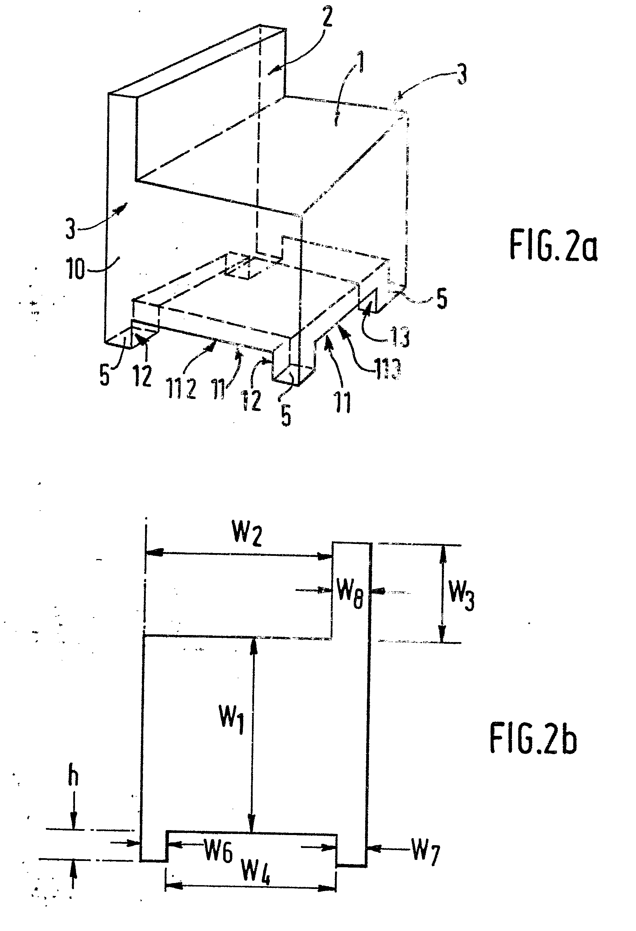

Selon l'invention ce but est atteint à l'aide du porte-échantillon représenté figure 2a en perspective.

Ce porte-échantillon 10 comprend une première face plane 1 et une seconde face plane 2 qui est perpendiculaire à la première.

Dans l'exemple de réalisation présenté sur la figure 2a, ces faces planes sont usinées avec une grande précision dans un bloc métallique massif.

Ce bloc métallique massif présente en outre, pratiquées dans sa base, des rainures 112 et 113 qui déterminent un plan de référence 11 parallèle à la première face plane 1. Ces rainures déterminent en outre des plans de référence 12 et 13, le plan de référence 12 étant parallèle à la face plane 2 et le plan de référence 13 étant perpendiculaire à la fois aux faces planes 1 et 2. Les rainures 112 et 113 déterminent ainsi dans le bloc 10 des pieds 5 de hauteur $h$ dont les faces internes constituent les plans de référence 12 et 13.

La dimension des rainures 112 et 113 est $W_4$. Ces rainures sont prévues pour permettre au porte-échantillon 10 de chevaucher un banc d'optique B représenté en perspective sur la figure 3a.

Tel que représenté sur cette figure 3a, le banc d'optique B comporte un premier plan de référence 21, de dimension $W_4$, pour supporter d'une part la chambre de Laüe, et d'autre part le porte-échantillon.

La chambre de Laüe est assujettie sur le banc d'optique B de telle manière que son axe optique X'X" soit perpendiculaire à la dimension $W_4$ du banc d'optique et parallèle à sa surface 21.

Le banc d'optique B comprend en outre un second plan de référence 22 perpendiculaire au plan 21. Dans ces conditions le porte-échantillon 10 peut être placé sur le banc d'optique de telle manière que le plan de référence 11 du porte-échantillon prenne appui sur le plan de référence 21 du banc B et que, ou bien le plan de référence 12, ou bien le plan de référence 13 prenne appui sur le plan de référence 22 du banc B.

La dimension des rainures 112 et 113 est donc prévue également de dimension $W_4$, mais avec un jeu juste suffisant pour le coulissement du porte-échantillon sur le banc d'optique B, les pieds 5 bloquant le porte-échantillon sur le banc. A cet effet, la dimension du plan de référence 22 du banc d'optique parallèlement à la dimension $\underline{h}$ des pieds 5, est prévue supérieure à cette dimension $\underline{h}$.

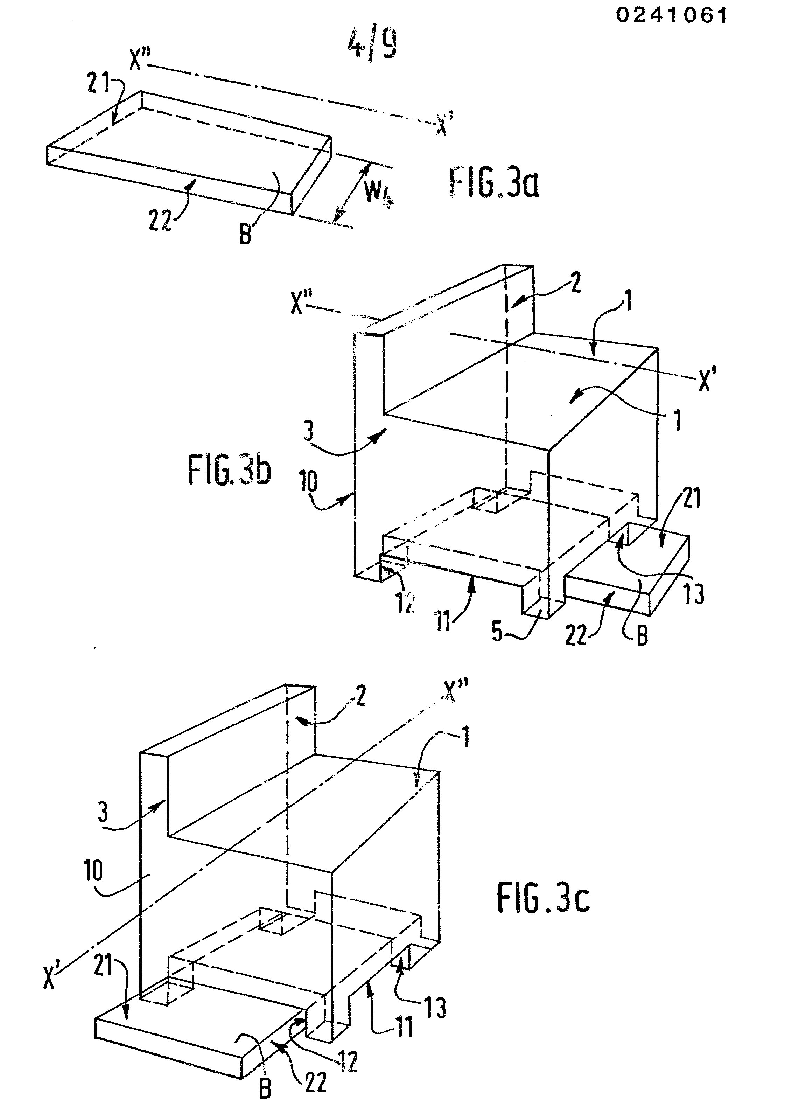

Les rainures 112 et 113 étant pratiquées dans deux directions perpendiculaires, le porte-échantillon 10 peut être mis en position sur le banc B également dans deux directions perpendiculaires, comme il est montré sur les figures 3b et 3c.

Tel que représenté figure 3b, le porte-échantillon 10 est placé sur le banc B de telle manière que le plan de référence 11 prend appui sur le plan de référence 21 du banc B, le plan de référence 13 prend appui sur le plan de référence 22. L'axe optique X'X" étant perpendiculaire à la dimension $W_4$ du banc, est alors perpendiculaire à la face plane 2 de ce dernier.

Cette position du porte-échantillon par rapport au banc B sera rappelée tout au long de l'exposé de l'invention en tant que position "transversale" du porte-échantillon sur le banc.

Tel que représenté figure 3c, le porte-échantillon 10 est placé sur le banc B de telle manière que le plan de référence 11 prend appui sur le plan de référence 21 du banc B, le plan de référence 12 prend appui sur le plan de référence 22. L'axe optique X'X" étant perpendiculaire à la dimension $W_4$ du banc, est alors parallèle à la fois à la face plane 2 et à la face plane 1 de ce dernier.

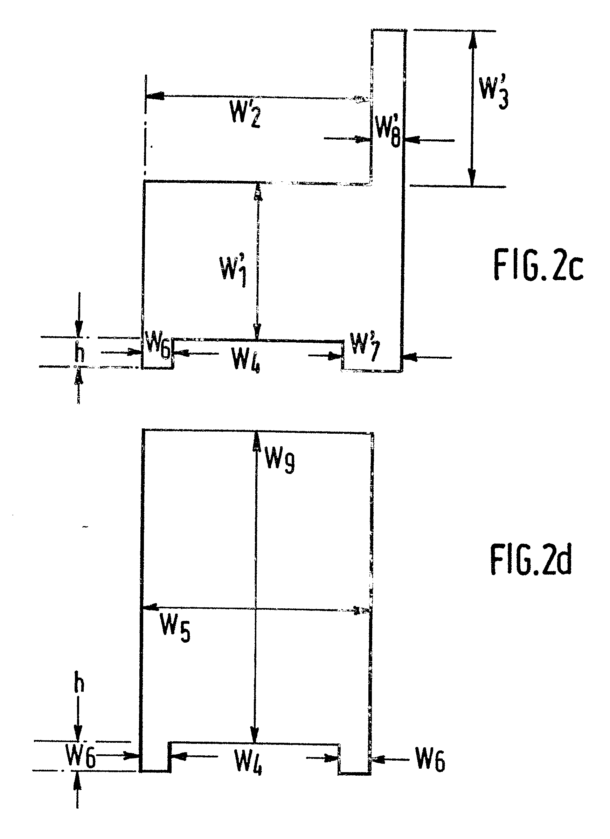

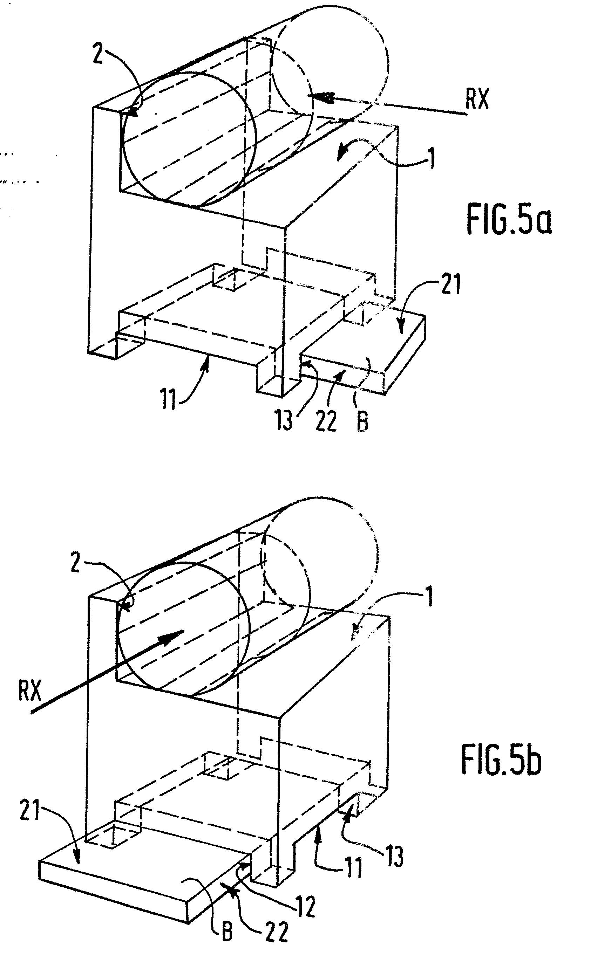

Dans la réalisation préférentielle de l'invention, présentée sur les figures 2 à 6, où le porte-échantillon est usiné à partir d'un bloc 10 où toutes les faces sont soit parallèles soit perpendiculaires, l'axe optique X'X" est alors perpendiculaire à la face plane 3 montrée sur les figures 2a, 3b, 3c.

Cette dernière position du porte-échantillon par rapport au banc B, illustrée par la figure 3c, sera rappelée tout au long de l'exposé de l'invention en tant que position "longitudinale" du porte-échantillon sur le banc.

La figure 2b représente en coupe transversale, le porte-échantillon selon l'invention dans un exemple de réalisation appliqué à recevoir des échantillons monocristallins cylindrique de diamètre $W_{10}$ = 2 pouces c'est-à-dire approximativement 51 mm = $W_{10}$.

La figure 2c représente en coupe transversale le porte-échantillon selon l'invention dans un exemple de réalisation appliqué à recevoir des échantillons monocristallins cylindrique de diamètre $W'_{10}$ = 3 pouces c'est-à-dire approximativement 76 mm = $W'_{10}$.

La figure 2d représente l'une ou l'autre des porte-échantillons pour l'une ou l'autre de ces applications vu du côté du dosseret formé par l'opposé de la face plane 2.

Les différentes dimensions du porte-échantillon selon l'invention pour lesdites applications sont données dans le tableau I à titre d'exemple de réalisation.

TABLEAU I

| Application 2" ≃ 51 mm | Application 3" ≃ 76 mm |
|---|---|
| $W_1$ = 64,5 mm | $W'_1$ = 52 mm |
| $W_2$ = 63 mm | $W'_2$ = 76 mm |
| $W_3$ = 35,5 mm | $W'_3$ = 48 mm |
| $W_4$ = 56 mm | $W_4$ = 56 mm |
| $W_5$ = 76 mm | $W_5$ = 76 mm |
| $W_6$ = 10 mm | $W_6$ = 10 mm |
| $W_7$ = 10 mm | $W'_7$ = 19 mm |
| $W_8$ = 13 mm | $W'_8$ = 9 mm |
| $W_{10}$ = 51 mm | $W'_{10}$ = 76 mm |

Le porte-échantillon selon l'invention peut être usiné de façon avantageuse dans un bloc métallique massif de DURAL (Marque déposée), d'acier inoxydable ou de bronze doré.

Les dimensions des porte-échantillons sont prévues telles que en position longitudinale ou transversale, le plan de symétrie de la face de référence 1, qui est la face porteuse de l'échantillon, est confondu avec le plan de symétrie du banc d'optique, avec celui de l'échantillon et contient en outre l'axe optique, l'échantillon étant appuyé contre la face plane 2.

De plus ces dimensions sont prévues telles que, en position longitudinale, la première face plane 1 et la seconde face plane 2 sont réglées à une distance de l'axe optique X'X" sensiblement égale au rayon moyen de l'échantillon.

Un procédé pour réaliser l'orientation d'un lingot massif à l'aide d'une chambre de Laüe munie du porte-échantillon selon l'invention est décrit ci-après, le lingot massif étant un monocristal d'arséniure de gallium pris à titre d'exemple.

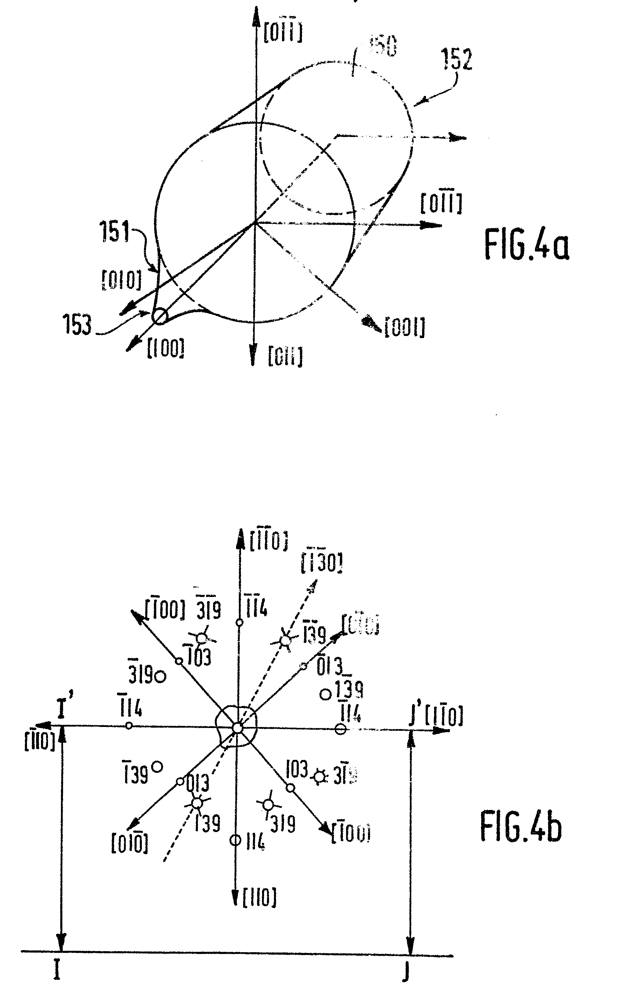

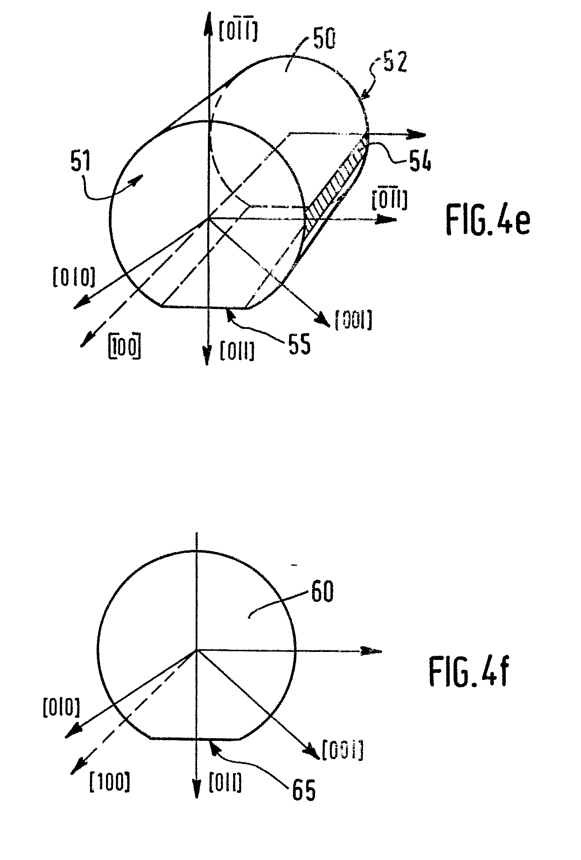

La figure 4a montre un lingot 150 d'arséniure de gallium brut de tirage. Ce lingot, qui est approximativement cylindrique, présente une partie de plus faible diamètre qui correspond à l'amorce du tirage à partir d'un germe soigneusement orienté. Cette partie de faible diamètre est dite "tête" 151 du lingot. La partie opposée est dite "queue" 152. Dans cet exemple, le tirage est effectué selon l'axe cristallographique [100]. Les autres axes cristallographiques sont alors placés respectivement comme il est montré sur la figure 4a.

Une facette 153 est d'abord réalisée perpendiculairement à l'axe de tirage, côté tête du lingot, soit par cassure soit par sciage.

Le lingot est mis en place sur le porte-échantillon 10 de manière à ce que l'axe de tirage soit parallèle à la fois aux faces 1 et 2. Le lingot est appuyé sur chacune des faces 1 et 2, du fait qu'il est presque cylindrique.

Le porte-échantillon 10 est placé sur le banc d'optique B en position dite "longitudinale". Les faces 1 et 2 sont toutes deux parallèles à l'axe optique X'X", et cet axe optique est perpendiculaire à la face 153.

Un diagramme de Laüe est effectué dans ces conditions et le lingot est tourné sur le porte-échantillon jusqu'à ce que l'axe [011] soit perpendiculaire à la face 1 et l'axe [0$\bar{1}$1] soit perpendiculaire à la face 2 du porte-échantillon.

La détermination des axes [110] et [$\bar{1}$10] est faite par mesures successives sur des diagrammes de Laüe tel que celui qui est représenté figure 4b. Les différences d'intensité des taches équivalentes {139} précisent les directions [110] et [$\bar{1}$10] pour la face (001).

Tant que le lingot n'est pas usiné, et que la mesure est faite sur la facette 153 d'extrémité de lingot, les axes doivent être repérés par rapport au cadre du plan film sur lequel est enregistré le diagramme. Ce cadre est concrétisé par la droite IJ sur la figure 4b, et est à peu près parallèle à la face 1 du porte-échantillon.

La désorientation de l'axe [$\overline{1}$10] par rapport au bord du cadre pris comme référence est donnée par la relation :

$$\Delta\theta = \frac{IJ' - JJ'}{IJ}$$

A l'aide des indications fournies par cette mesure, un méplat 55 est usiné perpendiculairement à l'axe [011]. La mesure peut alors être refaite en reposant le méplat sur la face 1 du porte-échantillon, la facette 153 étant par ailleurs orientée de la même façon que précédemment.

Par des mesures successives faites sur la facette 153, on retouche l'orientation du méplat 55 par usinage jusqu'à ce que la précision sur son orientation soit de l'ordre de ± 1°.

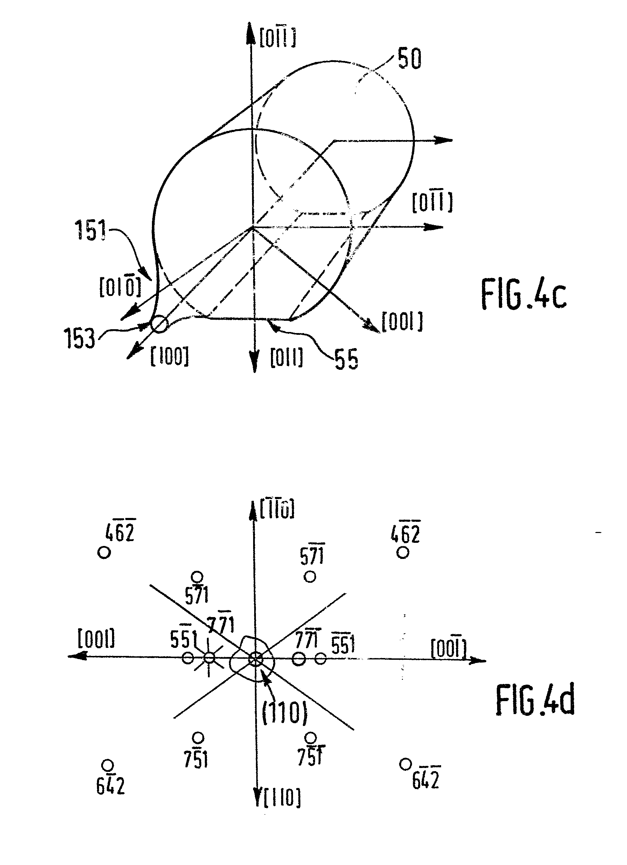

On réalise alors l'usinage du lingot pour obtenir un cylindre 50 d'axe parallèle à l'axe de tirage, comme représenté figure 4c.

A partir de cette opération, les mesures sont faites sur des diagrammes de Laüe obtenus en faisant tomber le faisceau de rayons X sur une génératrice du cylindre 50. A cet effet, ce cylindre 50 est placé sur le porte-échantillon 10 de telle manière que le méplat 55 repose sur la face 1 et qu'une génératrice soit appuyée contre la face 2. Le porte-échantillon est placé sur le ban B de manière telle que la face 2 soit perpendiculaire à l'axe optique X'X", et que le faisceau de rayons X tombe sur une génératrice du cylindre, c'est-à-dire en position définie comme transversale.

Un diagramme de Laüe tel que représenté figure 4d est obtenu. Pour obtenir une excellente précision sur la détermination des axes [001] et [$\overline{1}$10], il n'est plus besoin d'effectuer les mesures par rapport au cadre du plan film, ce qui est à l'évidence hautement imprécis. Les différences d'intensité de taches équivalentes {771} précisent les directions [001] et [001] pour les plans (110).

La précision sur les mesures est obtenue par une double mesure effectuée en tournant le cylindre 50 de 180° sur le porte-échantillon 10, le méplat 55 étant toujours posé sur la face 1. Cette double mesure permet de vérifier la reproductibilité des clichés par rapport à la référence du bord du support plan-film, mais en mesure relative et non en mesure absolue.

Une précision meilleure que 0,1° est obtenue sans aucun réglage compliqué, puisqu'une fois le banc d'optique aligné par rapport au collimateur et à la source, les seules opérations consistent à poser purement et simplement le porte-échantillon dans le sens voulu sur le banc d'optique, puis à appuyer l'échantillon sur les faces 1 et 2.

De telles mesures peuvent être faites d'une façon systématique et rapide en fabrication industrielle.

Lorsque l'orientation optimale de l'axe du cylindre et des faces terminales est obtenue des disques minces 60 sont taillés dans le cylindre 50 perpendiculairement à l'axe. Le méplat 56 formé dans le cylindre constitue, comme on l'a vu, un pan coupé 65 de référence sur chaque disque.

Une seconde partie 20 est alors adjointe au porte-échantillon 10 pour réaliser la mesure d'orientation des faces des disques minces taillés dans le cylindre.

Un tel disque mince est représenté figure 4f.

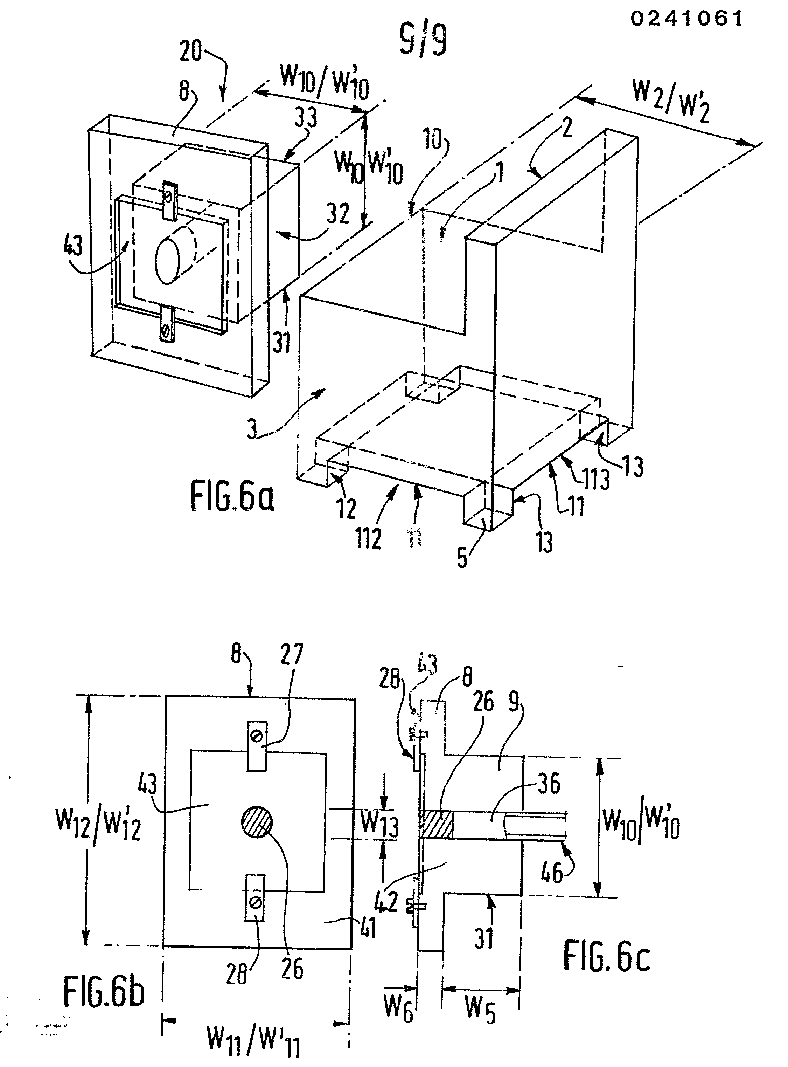

Tel que représenté sur la figure 6a, la seconde partie du porte-échantillon, ou porte-disque 20, est composée d'un corps 9 parallélépipèdique, présentant des plans de référence 31, 32, 33 perpendiculaires entre eux.

Lors d'une mesure, les plans 31 et 32 du porte-disque sont destinés à être mis en coïncidence avec les faces planes 1 et 2 respectivement, du porte-échantillon.

C'est pourquoi, dans le cas où le porte-échantillon est conforme à la figure 2b, les plans 31 et 32 du

$0241061$

porte-disque présentent les dimensions $W_5$ x $W_{10}$, et dans le cas où le porte-échantillon est conforme à la figure 2c, les plans 31 et 32 présentent les dimensions $W_5$ x $W'_{10}$.

Le corps 9 comprend également un évidement central 36 pour permettre son raccord à un dispositif à vide non représenté, par exemple par l'intermédiaire d'un tuyau 46.

Ce corps 9 est muni parallèlement au plan de référence 33 d'une flasque 8 de dimension peu précises, $W_{11}$ ou $W'_{11}$, débordant simplement au-delà des faces 31 et 32 pour que, lorsque le corps 9 est en place sur le porte-échantillon 10, cette flasque 8 bloque le porte-disque contre le flanc 3 du porte-échantillon.

Cette flasque 8 est munie d'un évidement carré qui découvre la face plane 43 parallèle au plan de référence 33. Cette face plane 43 présente des dimensions $W_{10}$ x $W_{10}$ pour recevoir des disques de diamètre $W_{10}$, ou des dimensions $W'_{10}$ x $W'_{10}$ pour les disques de diamètre $W'_{10}$.

La profondeur de l'évidement carré est $\underline{e}$ équivalente à l'épaisseur d'un disque 60. Cette face plane 43 est façonnée avec une grande précision sur la planéité. De plus au débouché de l'évidement 36 raccordable à une pompe à vide, est placé un bouchon d'un corps à la fois rigide et poreux 26, de telle sorte que le fond de l'évidement 43 est parfaitement plan.

La flaque 8 est en outre munie de pattes de fixation 27 et 28 maintenues par exemple par des vis.

En position de mesure, le disque 60 découpé dans le cylindre 50, est placé dans l'évidement carré contre la face plane 43, est maintenu par les pattes 27 et 28, et est plaqué contre le fond de l'évidement carré par la mise sous vide de l'évidement 36. Le bouchon 26 de matériau rigide et poreux prévient la déformation du disque 60 lors de cette mise sous vide.

Le corps 9 est mis en position sur le porte-échantillon de telle manière que ses faces 31 et 32 coïncident respectivement avec les faces 1 et 2 du porte-échantillon.

Le porte-échantillon est alors mis en place sur le banc d'optique B de telle manière que l'axe optique X'X" est parallèle aux faces 1 et 2, et perpendiculaire au disque 60 placé dans l'évidement 43, c'est-à-dire en position définie comme longitudinale.

Le pan coupé 65 est appuyé contre un des bords 41 ou 42 de l'évidement 43. Ces bords 41 et 42 forment des faces planes parallèles aux faces planes 1 et 2 respectivement et servent de référence pour la réalisation du diagramme de Laüe.

Pour obtenir une bonne précision sur la mesure, il est fait une double mesure, par retournement du disque face pour face sur le porte-disque. Ce retournement permet, par la différence de la demi-somme des angles entre les taches de même indice, de donner les valeurs de la constante instrumentale et de la désorientation.

Le tableau II donne les dimensions pour le porte-disque à titre d'exemple de réalisation.

<div align="center">

**TABLEAU II**

</div>

| Application 2 pouces $\simeq$ 51mm | Application 3 pouces $\simeq$ 76mm |
|---|---|
| $W_{10} = 51$ mm | $W'_{10} = 76$ mm |
| $W_5 = 76$ mm | $W_5 = 76$ mm |
| $W_6 = 10$ mm | $W_6 = 10$ mm |
| $e = 1$ mm | $e = 1$ mm |
| $W_{11} = 71$ mm | $W'_{11} = 96$ mm |
| $W_{12} = 91$ mm | $W'_{12} = 116$ mm |
| $W_{13} = 10$ mm | $W'_{13} = 10$ mm |

Le matériau pour réaliser le porte-dique 20 peut être choisi parmi les matériaux cités pour réaliser le porte-échantillon.

Le matériau pour réaliser le bouchon 26 rigide et poreux peut être avantageusement du bronze fritté.

Il peut être en outre réalisé sur le cylindre du monocristal massif 50, un petit méplat à 90° du grand méplat. Ce petit méplat permet donc le repérage d'une troisième référence cristallographique.

Tel que représenté figure 4e il a été choisi de réaliser le petit méplat 54 du cylindre d'arséniure de gallium perpendiculaire à l'axe [0$\bar{1}$1].

Ces conventions, à savoir pour l'arséniure de gallium,
- axe de tirage selon [100]
- plan du grand méplat perpendiculaire à l'axe [011]
- plan du petit méplat perpendiculaire à l'axe [0$\bar{1}$1]
constituent un exemple de réalisation préférentiel pour ce matériau, du fait que le grand méplat présente alors les indices les plus simples, et du fait que le petit méplat se déduit du grand méplat par une rotation de 90° dans le sens trigonométrique.

Mais il est évident que d'autres conventions peuvent être adoptées sans changer la structure du dispositif porte-échantillon selon l'invention ni le procédé pour mettre en oeuvre une mesure à l'aide de ce dispositif, ce qui en démontre l'avantage.

0241061

REVENDICATIONS :

1.       Dispositif pour la mesure de l'orientation de matériaux massifs monocristallins par rapport aux repères cristallographiques par la méthode de Laüe, formé d'une part d'une chambre de Laüe incluant une source polychromatique de rayons X, un support de film photographique et un collimateur placé sur le trajet des rayons X entre la source et le film à proximité de ce dernier définissant l'axe optique de la chambre de Laüe, et formé d'autre part de moyens de support pour un échantillon massif, de moyens d'alignement pour la chambre et les moyens de support, et de moyens pour repérer l'orientation de l'échantillon par rapport aux axes cristallographiques, caractérisé en ce que les moyens de support comprennent au moins un porte-échantillon qui présente une première face plane pour recevoir l'échantillon, une seconde face plane perpendiculaire à la première pour bloquer l'échantillon, un premier plan de référence parallèle à la première face plane, un second plan de référence parallèle à la seconde face plane et un troisième plan de référence perpendiculaire à la fois à la première et à la seconde face plane, en ce que les moyens d'alignement consistent en un banc d'optique présentant au moins deux faces planes de référence parallèles à l'axe optique de la chambre de Laüe, et en ce que les moyens de support et les moyens d'alignement coopèrent pour fournir les moyens pour repérer l'orientation de l'échantillon du fait que le premier et le second plan de référence du banc d'optique supportent pendant la mesure l'ensemble choisi parmi le premier et le second, ou bien le premier et le troisième plan de référence du porte-échantillon.

2.       Dispositif selon la revendication 1, caractérisé en ce que, lorsque le premier et le second plan de référence du banc d'optique supportent l'ensemble du premier et du second plan de référence du porte-échantillon, la première face plane et la seconde face plane de ce porte-échantillon sont réglées, par rapport à l'axe optique de la chambre de Laüe, à une distance de cet axe sensiblement égale au rayon moyen de l'échantillon.

3. Dispositif selon la revendication 2, caractérisé en ce que les moyens de support comprennent en outre un porte-disque qui présente une première face plane, et une seconde face plane perpendiculaire à la première pour appuyer et bloquer la tranche d'un disque monocristallin taillé dans un lingot, une troisième face plane perpendiculaire aux deux premières pour recevoir l'un des faces du disque, un premier plan de référence parallèle à la première face plane, et un second plan de référence parallèle à la seconde face plane, et en ce que le porte-disque coopère avec le porte-échantillon et avec les moyens d'alignement pour fournir les moyens pour repérer l'orientation du disque, du fait que, pendant la mesure, le premier et le deuxième plan de référence du porte-disque prennent appui sur la première et la deuxième face plane du porte-échantillon, et du fait que le premier et le second plan de référence du banc d'optique supportent le premier et le troisième plan de référence du porte-échantillon.

4. Procédé de réalisation d'un dispositif semiconducteur à partir d'un lingot massif monocristallin d'un matériau semiconducteur dont l'axe de croissance cristalline est parallèle à un axe cristallographique, jusqu'à l'obtention d'un disque substrat orienté, caractérisé en ce qu'il comprend l'alternance d'étapes de repérage de plans cristallographiques du matériau au moyen du dispositif selon l'une des revendications 1 à 3, et d'étapes d'usinage parallèlement à ces plans pour former des faces de référence.

5. Procédé de réalisation selon la revendication 4, caractérisé en ce qu'il comprend les étapes de :

a) repérage d'un plan cristallin caractéristique en plaçant le lingot massif monocristallin brut de croissance sur le porte-échantillon de telle manière qu'il prenne appui à la fois sur la première et la seconde face plane du porte-échantillon et que l'axe de croissance cristalline soit parallèle à ces faces, et en plaçant le porte-échantillon ainsi équipé sur le banc d'optique de manière telle que le premier et le second plan de référence du porte-échantillon s'appuient sur le premier et le second plan de référence du banc d'optique, et de manière telle que l'axe de croissance du lingot est confondu avec l'axe optique du système, ce repérage étant alors effectué sur le diagramme de diffraction de rayons X réalisé à partir d'une facette perpendiculaire à l'axe de croissance ;

b) usinage, d'après le repérage précédent, d'une face de référence ou grand méplat, selon un plan cristallographique parallèle à l'axe de croissance ;

c) mesure de la désorientation éventuelle après usinage du grand méplat, en plaçant le lingot massif monocristallin sur le porte-échantillon de telle manière que le grand méplat prenne appui sur la première face plane du porte-échantillon et qu'une génératrice du lingot prenne appui sur la seconde face plane, l'axe de croissance du lingot étant parallèle à ces faces, et en plaçant le porte-échantillon ainsi équipé sur le banc d'optique de manière telle que le premier et le troisième plan de référence du porte-échantillon s'appuient sur le premier et le second plan de référence du banc d'optique et de manière telle que l'axe de croissance du lingot est perpendiculaire à l'axe optique, cette mesure étant alors effectuée sur le diagramme de diffraction des rayons X par une facette parallèle à une génératrice du lingot et parallèle à l'axe de croissance ;

d) usinage du lingot massif d'après la mesure précédente en un cylindre d'axe de symétrie parallèle à l'axe de croissance du lingot, retouche éventuelle de l'usinage du grand méplat, et usinage des bases du cylindre perpendiculairement à l'axe de croissance ;

e) mesure de la désorientation éventuelle des bases du cylindre et du grand méplat en renouvelant les étapes a) et c), le grand méplat étant appuyé sur la première face plane du porte-écahntillon et une génératrice du cylindre étant appuyée sur la seconde face plane ;

f) retouche éventuelle de l'usinage du grand méplat et des bases d'après la mesure précédente jusqu'à l'obtention de la précision voulue sur leur orientation ;

g) découpe d'un disque parallèlement aux bases du cylindre pour former le substrat du dispositif semiconducteur ;

h) mesure de la désorientation éventuelle de ce disque en plaçant ce disque sur le porte-disque, en plaçant le porte-disque sur le porte-échantillon et en effectuant la mesure selon l'étape a).

6. Procédé de réalisation selon la revendication 5, caractérisé en ce qu'il comprend en outre, précédant la découpe de disque, les étapes de :

i) repérage d'un plan cristallin perpendiculaire au grand méplat et parallèle à l'axe de croissance, selon l'étape a) ;

j) usinage d'un petit méplat selon ce plan cristallin ;

k) mesure de la désorientation éventuelle de ce petit méplat selon l'étape c) et retouche de l'usinage jusqu'à obtention de la précision voulue.

7. Procédé de réalisation selon les revendications 5 ou 6, caractérisé en ce que les mesures de désorientations des faces cristallines sont effectuées chacune au moyen de deux diagrammes de diffraction obtenus en opérant sur l'échantillon une rotation de 180° parallèlement au grand méplat.

FIG.1

1-IX-PHF 86-522

0241061

FIG.2a

FIG.2b

2-IX-PHF 86-522

0241061

FIG.2c

FIG.2d

0241061

FIG.3a

FIG.3b

FIG.3c

4-IX-PHF 86-522

FIG.4a

FIG.4b

0241061

FIG.4c

FIG.4d

FIG.4e

FIG.4f

0241061

8/9

RX

2

1

21

11

13 22 B

FIG.5a

2

RX

1

21

11

13

12

B 22

FIG.5b

8-Ⅸ-PHF 86-522

0241061

FIG.6a

FIG.6b

FIG.6c

9-IX-PHF 86-522